# FASCICULE DE BREVET EUROPEEN

(11) **EP 2 414 302 B1**
(45) Date de publication et mention de la délivrance du brevet: **21.01.2015**
(21) Numéro de dépôt: 10717701.6
(22) Date de dépôt: 31.03.2010
(51) Int. Cl.: C04B 24/26

(54) **Utilisation des COPOLYMÈRES SUPERPLASTIFIANTS RÉDUCTEURS DE VISCOSITÉ**
Verwendung von VISKOSITÄTSVERRINGERND UND VERFLÜSSIGEND WIRKENDEn COPOLYMEREn
Use of VISCOSITY-REDUCING SUPER-PLASTICISING COPOLYMERS

(30) Priorité: 01.04.2009 FR 0952101
(43) Date de publication de la demande: 08.02.2012
(73) Titulaire: Lafarge, 75116 Paris (FR); Chryso, 92440 Issy-Les-Moulineaux (FR)
(72) Inventeur: RINALDI, David, F-69003 Lyon (FR); NARANJO, Horacio, F-38200 Jardin (FR); MOSQUET, Martin, F-38300 Bourgoin-jallieu (FR); MAITRASSE, Philippe, F-45170 Chilleurs aux Bois (FR); DESSEROIR, Alexandre, F-28700 Sainville (FR)
(74) Mandataire: Blot, Philippe Robert Emile
(86) Numéro de dépôt international: PCT/FR2010/050611
(87) Numéro de publication internationale: WO 2010/112772

(56) Documents cités:
- EP-A1- 1 734 062
- WO-A1-02/083594
- WO-A1-2004/099100
- WO-A1-2005/044752
- JP-A- 9 248 438
- US-A1- 2004 260 011
- YAMADA ET AL: "Effects of the chemical structure on the properties of polycarboxylate-type superplasticizer" CEM. CONCR. RES., vol. 30, no. 20, 2000, pages 197-207, XP002596055 Pergamon DOI: 10.1016/S0008-8846(99)00230-6

## Description

La présente invention concerne l'utilisation de (co)polymères polycarboxyliques polyalkoxylés spécifiques pour améliorer la viscosité de compositions hydrauliques.

Lors de la mise en place d'un béton fluide sur chantier, un critère important de performance constitue la viscosité du béton. Une viscosité faible est utile car elle permet d'accélérer la préparation, le transfert et la mise en place. Elle est particulièrement recherchée pour les formulations de bétons auto-nivelants. En pratique, la viscosité du béton peut être mesurée par le temps d'écoulement d'un volume donné de béton à travers un cône tronconique. Plus le temps d'écoulement est court, moins le béton est visqueux et plus aisée sera sa mise en place.

Il est ainsi fréquent d'ajouter de l'eau au béton lors de son transport depuis la centrale de fabrication ou sur le chantier si celui-ci a perdu en fluidité. Or si l'ajout d'eau permet de diminuer la viscosité d'une formulation de béton, il peut entraîner également une dégradation des résistances mécaniques et des risques accrus de fissuration, pouvant donner lieu à des litiges sur béton durci.

La découverte des propriétés dispersantes exceptionnelles des (co)polymères peignes polycarboxylates polyalkoxylés (PCP), aussi appelés superplastifiants, a permis à la technologie du béton de progresser rapidement. Cependant, leur effet réducteur d'eau ne présuppose pas de leur effet abaissant la viscosité de bétons, lequel s'avère très variable.

Ces superplastifiants sont des (co)polymères présentant une structure en peigne, dont la chaîne principale polymérique comporte des groupes carboxyliques qui portent des chaînes latérales composées de séquences de type polyéther.

Afin d'améliorer la capacité de réduction de viscosité d'adjuvants de type PCP, la demande de brevet WO 2004/099100 décrit des mélanges de (co)polymères dont un a été modifié par introduction d'un groupe hydrophobe dans la chaîne latérale. Ces mélanges de (co)polymères sont toutefois assez complexes et aussi bien leur formulation que leurs propriétés peuvent être délicates à contrôler.

Par ailleurs, la demande de brevet WO 2004/099099 propose des (co)polymères obtenus par polymérisation de 20 à 60% en poids de (méth)acrylate d'alkyle, 15 à 40 % en mole de monomère insaturé portant une chaîne polyalkylène glycol et 19 à 65 % en mole d'un acide carboxylique. Selon ce document, seuls les (co)polymères préparés en respectant ces plages donnent des résultats favorables.

La demande de brevet JP 09248438 décrit des (co)polymères comportant une chaîne principale, notamment composée essentiellement d'unités (méth)acryliques, et des chaînes latérales polyoxyalkylées comprenant des unités hydrophobes distribuées de manière statistique à titre d'adjuvant afin d'abaisser la viscosité de compositions hydrauliques.

Un but de l'invention était donc de proposer des adjuvants spécifiques permettant d'améliorer la viscosité, en particulier en la diminuant, des formulations de compositions hydrauliques, tout en conservant des propriétés intéressantes de réduction d'eau.

Un autre but enfin était de proposer de tels adjuvants qui soient peu onéreux et de fabrication industrielle aisée.

Ce but est atteint par l'utilisation de (co)polymères comportant une chaîne principale obtenue essentiellement à partir de monomères (méth)acryliques, et des chaînes latérales de type polyoxyalkylé comprenant des unités hydrophobes distribuées de manière statistique à titre d'adjuvant afin d'abaisser la viscosité de compositions hydrauliques telle que définie dans la revendication 1.

L'invention est basée sur la constatation surprenante que l'association, dans un (co)polymère, d'unités issues de monomères (méth)acryliques dans la chaîne principale et de chaînes latérales de type polyoxyalkylé comprenant des unités hydrophobes distribuées de manière statistique, accessibles par un procédé de préparation simple et peu onéreux, confère aux polymères un comportement intéressant en matière d'abaissement de la viscosité.

On entend dans ce qui suit par le terme « polymère peigne » désigner des (co)polymères comportant une chaîne principale et des chaînes latérales.

Le terme « (co)polymère » englobe les polymères et les copolymères, obtenus par polymérisation d'un seul ou de plusieurs monomères, respectivement.

Le terme « monomères (méth)acryliques » englobe les monomères acryliques et les monomères méthacryliques.

Par le terme « compositions hydrauliques », on entend définir toute composition présentant une prise hydraulique, et tout particulièrement les ciments, mortiers et bétons destinés à l'ensemble des marchés de la construction (bâtiment, génie civil ou usine de préfabrication).

On entend par le terme « groupe hydrophobe » ou « unité hydrophobe » un groupe ayant une contribution négative dans le calcul du HLB selon la théorie de Davies (J. T. Davies, Proc. Intern. Congr. Surface Active Substances, 2nd, London, Vol. I, p. 426 (1957)). Les valeurs HLB peuvent par exemple être les suivantes :

| Groupes | HLB selon la théorie de Davies |
|---|---|
| -OSO₃ Na | +38,7 |
| -COOK | +21,1 |
| -COO Na | +19,1 |
| -N amine ternaire | +9,4 |
| Ester (sorbitan) | +6,8 |
| Ester (libre) | +2,4 |
| -COOH | +2,1 |
| -OH (libre) | +1,9 |
| -O- | +1,3 |
| -OH (sorbitan) | +0,5 |
| -CH₂-CH₂-O- (groupe oxyde d'éthylène) | +0,33 |
| -CH(CH₃)-CH₂-O- (groupe oxyde de propylène) | -0,015 |
| -CH₃, -CH₂-, =CH- | -0,475 |

De préférence, l'unité hydrophobe comprend ou est constituée par des groupes oxyalkylène comportant plus de 2 atomes de carbone, et tout particulièrement, au moins trois atomes de carbone. De préférence, les groupes hydrophobes sont des groupes oxypropylène et oxybutylène, de préférence des groupes oxypropylène.

Par le terme « distribution statistique », on entend désigner une distribution irrégulière, donc pas une distribution en bloc des unités hydrophobes dans la chaîne latérale. Ce type de distribution est obtenu notamment par réaction en présence des différentes espèces et sa structure dépendra notamment de leur réactivité respective. Ce terme est censé couvrir notamment les distributions présentes dans les (co)polymères dits à gradient (« graded ») ou effilés (« tapered ») comportant des chaînes dans lesquelles la concentration d'une unité augmente progressivement le long de la chaîne. Ce terme est également censé couvrir les distributions comportant une terminaison de chaîne ayant au moins un groupe non hydrophobe, notamment un groupe oxyéthylène.

Selon l'invention, le (co)polymère utilisé a une constitution spécifique aussi bien au niveau de la chaîne principale qu'au niveau des chaînes latérales.

Le (co)polymère utilisé selon l'invention comporte une chaîne principale composée essentiellement d'unités (méth)acryliques, et des chaînes latérales de type polyoxyalkylé comprenant de 1 à 80 % en masse par rapport au polymère sec d'unités hydrophobes distribuées de manière statistique.

On entend par le terme « composée essentiellement » une proportion d'au moins 50%, de préférence au moins 80% et encore préférée au moins 95% en masse de monomère par rapport à la totalité de monomères. Selon un mode de réalisation préféré, le (co)polymère utilisé selon l'invention comporte seulement des unités (méth)acryliques.

Selon l'invention, la chaîne principale a un degré de polymérisation de 15 à 45, notamment de 20 à 40.

Selon un mode de réalisation de l'invention, les unités (méth)acryliques dans le (co)polymère utilisé sont de formule (I) suivante : 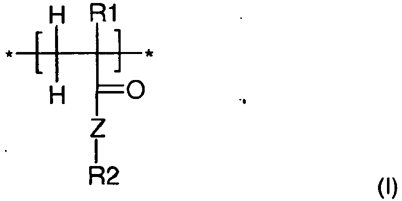 dans laquelle :
R¹ est hydrogène ou méthyle ;
Z est O ou NH ; et
R² est H ou un groupe alkyle, aryle, alkylaryle, arylalkyle de 1 à 20 atomes de carbone, ou encore un groupe -Q-R³ dans lequel R³ est H ou un groupe alkyle, aryle, alkylaryle, arylalkyle de 1 à 20 atomes de carbone, et Q est de formule (II): 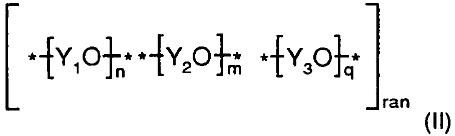 dans laquelle :
   - Y₁ représente un groupe alkylène de 2 atomes de carbone,
   - Y₂ représente un groupe alkylène de 3 atomes de carbone ;
   - Y₃ représente un groupe alkylène de 4 atomes de carbone ;
   - n est un nombre entier compris de 1 à 100;
   - m est un nombre entier compris de 0 à 150 ;
   - q est un nombre entier compris de 0 à 150 ; et
   - (n + m + q) est un nombre entier compris de 1 à 500,
sachant que le (co)polymère de formule (I) comporte au moins un groupe Q avec m ou q >0.

La mention « ran » indexant les crochets dans la formule (II) signifie que les groupes Y₁O à Y₃O sont distribués de manière statistique dans le groupe Q.

Dans le (co)polymère utilisé selon l'invention, il n'est pas nécessaire que chacun des groupes Q comporte des groupes Y₂O ou Y₃O. Toutefois, le rapport moyen n/(n+m+q) varie de préférence entre 0,2 et 0,99.

Selon l'invention, la masse molaire moyenne des chaînes latérales est comprise de 500 à 5000 g/mol.

De préférence, le (co)polymère est susceptible d'être obtenu par polymérisation radicalaire d'un monomère (méth)acrylique de formule (la) suivante : 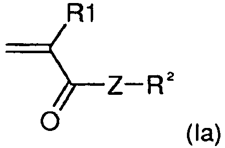 dans laquelle les substituants R¹, Z et R² ont la même signification que dans la formule (I) précédente.

Dans les formules (I) (Ia) et (II) précitées, les caractéristiques suivantes sont particulièrement préférées :
- Z est O ;
- R² est un groupe -Q-R³ dans lequel :
   - R³ représente un groupe méthyle ou éthyle, de préférence un groupe méthyle ;
   - n est un nombre entier variant de 1 à 100;
   - m est un nombre entier variant de 1 à 100, de préférence de 1 à 75 ; et
   - q est 0 ;
   - le rapport moyen n/(n+m+q) varie de 0,5 à 0,99.

Avantageusement, les (co)polymères décrits peuvent être composés d'unités différentes. Notamment, il peut être intéressant d'introduire des chaînes latérales différentes dans leur longueur et/ou le nombre et la disposition des unités hydrophobes.

Par ailleurs, les (co)polymères décrits peuvent également comporter d'autres unités dans la chaîne principale. Notamment, il peut être intéressant d'introduire des unités issues de monomères maléiques, notamment choisies parmi le groupe de l'acide maléique, l'anhydride maléique, les hémi-esters de l'acide maléique avec des alcools, glycols ou amines comportant 1 à 10 atomes de carbone et éventuellement alkoxylés avec 1 à 500 unités oxyalkylène. Ces unités peuvent le cas échéant également porter des chaînes latérales de type polyoxyalkylé comprenant des unités hydrophobes distribuées de manière statistique.

La teneur en de telles unités dans le (co)polymère est cependant de préférence inférieure à 35 %, et de préférence inférieure à 25 % en nombre. Particulièrement préférés sont les polymères dont la chaîne est constituée d'unités (méth)acryliques, à l'exclusion d'autres unités. En l'absence de monomère allylique, le pourcentage de ce type d'unités peut aller jusqu'à 49 % en nombre.

Avantageusement, le (co)polymère selon l'invention comprend au moins 3% d'unités hydrophobes, de préférence au moins 17% d'unités hydrophobes en pourcentage massique par rapport à la masse du (co)polymère.

Préférentiellement, le (co)polymère selon l'invention comprend au plus 60% d'unités hydrophobes en pourcentage massique par rapport à la masse du (co)polymère.

Selon l'invention, le (co)polymère comprend des chaînes latérales de type oxyalkylène comprenant des unités hydrophobes réparties de manière statistique dans la chaîne.

Les (co)polymères présentant ce type de distribution sont particulièrement aisés à préparer, puisque la chaîne polyoxyalkylée peut être synthétisée par une seule étape, en présence des différents oxydes d'alkylène, au lieu d'un procédé à plusieurs étapes, comme c'est le plus souvent le cas pour la préparation de (co)polymères bloc, par exemple.

La chaîne latérale oxyalkylène peut être présente sur le ou les monomères dès avant la polymérisation ou résulter d'une réaction d'estérification après polymérisation.

Lorsque les chaînes latérales de type oxyalkylène comportant des unités hydrophobes sont portées par le monomère, les (co)polymères peuvent être ainsi obtenus par copolymérisation, de préférence de type radicalaire, de monomères appropriés. La (co)polymérisation peut être conduite par voie radicalaire de manière conventionnelle comme décrit par exemple dans la demande de brevet n°PCT/FR2005/002438 (WO2006/037888).

En variante, les chaînes latérales peuvent être introduites par réaction d'un acide polycarboxylique avec un polyéther approprié, selon le procédé décrit par exemple dans la demande FR 2 776 285.

Selon une variante, le (co)polymère est susceptible d'être obtenu par post-estérification, procédé dans lequel l'on fait réagir, en présence d'eau et d'un catalyseur, à une température comprise entre 120 et 250°C :
- au moins un acide polycarboxylique obtenu par polymérisation d'au moins un acide carboxylique non saturé; et
- au moins un polyéther contenant un groupe hydroxyle libre pouvant réagir avec une fonction carboxylique du dit acide polycarboxylique,

le catalyseur étant un sel alcalin ou alcalin-terreux d'un acide protique fort.

Le catalyseur peut être choisi en particulier parmi les sels d'acides alkyl-, alkylaryl-aryl-, ou arylalkylsulfoniques, les acides alkyl-, alkylaryl-, aryl-, ou arylalkylphosphoriques, les acides alkyl-, alkylaryl-, aryl-, ou arylalkylphosphoniques et les alkyl-, alkylaryl-, aryl-, ou arylalkylsulfates acides. Le catalyseur est un sel alcalin ou alcalin-terreux des acides définis ci-dessus, et inclut notamment les sels de Na, K, Li, Ca et Mg. Le catalyseur peut être ajouté en une quantité de 0,04% à 10% molaire, rapporté au nombre de fonctions carboxyliques de l'acide polycarboxylique.

De préférence, l'acide polycarboxylique est obtenu par polymérisation de monomères contenant comme composant essentiel l'acide (méth)acrylique. Eventuellement, l'acide polycarboxylique peut aussi être dérivé d'autres comonomères comprenant une fonctionnalité différente d'un acide carboxylique à une ou plusieurs insaturations éthyléniques pouvant être copolymérisés avec l'acide (méth)acrylique, tels que l'acide maléique et l'anhydride d'acide maléique ou les monomères comprenant des groupes sulfoniques, sulfates acides, phosphoriques, phosphoniques et vinyl méthallyl.

De préférence, l'acide polycarboxylique est un homopolymère et/ou un (co)polymères d'acide (méth)acrylique ou un (co)polymère d'acide (méth)acrylique et d'acide maléique ou d'anhydride maléique. La masse molaire moyenne en poids Mw de l'acide polycarboxylique est de préférence compris entre 500 et 60 000, notamment entre 500 et 3800, en particulier entre 1000 et 3500.

Le polyéther peut être en particulier un alkyléther de polyalkylène glycol de formule HO-Q-R³ dans lequel R³ et Q sont tels qu'indiqués pour la formule (II) décrite ci-dessus. Ce type de macromonomère peut être obtenu par exemple par polymérisation anionique avec plusieurs oxydes d'alkylène en présence d'une base forte. On ajoute par exemple 5 à 80% molaire de polyéther rapporté au nombre de fonctions carboxyliques disponibles de l'acide polycarboxylique.

De préférence, le polyéther est constitué :
- d'un ou de plusieurs alkyléthers de polyéthylène glycol, contenant des unités oxypropylènes, se distinguant par leur poids moléculaire moyen en poids ; ou
- d'un ou plusieurs alkyléthers de polypropylène glycol renfermant des unités oxyéthylènes, se distinguant par leur poids moléculaire moyen en poids, ou
- d'un mélange des alkyléthers ainsi définis.

La masse molaire moyenne du polyéther peut varier de 500 à 5000, notamment de 1000 à 3000.

La quantité de polyéther mis en oeuvre dans le procédé décrit sera fonction du degré d'estérification souhaité.

La réaction d'estérification peut être conduite de manière à estérifier une partie, par exemple 5 à 80 % des fonctions carboxyliques par un polyéther ou un mélange de polyéthers. Elle est généralement conduite sous pression réduite afin d'éliminer progressivement l'eau formée au cours de la réaction. La pression réduite est généralement comprise entre environ 5 et 150 mbars. La réaction est arrêtée dès que le pourcentage visé de fonctions carboxylique estérifiées de l'acide polycarboxylique est atteint.

La masse molaire moyenne en poids, « Mw », du copolymère dispersant, mesuré par chromatographie par perméation de gel avec un étalonnage polyéthylène glycol, varie généralement entre environ 1000 et environ 1 000 000, de préférence entre environ 10 000 et environ 80 000, notamment de 10 000 à 50 000, en particulier de 15 000 à 45 000. Sauf indication contraire, dans la présente demande, les masses molaires sont exprimées en g/mol, l'unité étant communément omise.

Avantageusement, le (co)polymère utilisé selon l'invention peut être mis en oeuvre sans purification subséquente. Lorsqu'il a été préparé selon le procédé décrit ci-dessus, le (co)polymère pourra être utilisé sous forme native ou à un niveau de neutralisation choisi en utilisant une base ou un mélange de bases connues de l'homme de l'art, par exemple un hydroxyde de sodium, hydroxyde de lithium, un hydroxyde de potassium, un hydroxyde de calcium ou une amine primaire, secondaire ou tertiaire.

Le (co)polymère utilisé selon l'invention est en général conditionné sous forme de solution, notamment aqueuse, ou dans un solvant, en dispersion, ou encore sous forme de poudre. De préférence, il est utilisé sous forme de solution aqueuse, par exemple à une concentration de 20 à 80 % de préférence de 20 à 40 % en poids sec.

Par ailleurs, la formulation pourra comporter en outre un anti-mousse afin de corriger le taux d'air de la composition hydraulique. La formulation et le dosage en anti-mousse seront fonction de la structure du polymère dispersant et du taux d'air désiré.

Les résultats obtenus montrent que l'effet réducteur de viscosité à 5 minutes est proportionnel à la quantité de groupes hydrophobes par rapport au liant. Aussi, le dosage en (co)polymère peut être ajusté de manière à ce que le taux de groupes hydrophobes dans la composition de liant hydraulique soit compris entre 0,02 à 0,5 % massiques par rapport au poids de liant, selon l'effet désiré.

Enfin, le (co)polymère formulé pourra être utilisé seul ou en association avec un ou plusieurs autres additifs tels qu'un accélérateur, retardateur ou un autre dispersant, afin d'ajuster les propriétés rhéologiques et de prise du matériau.

Le (co)polymère peut être utilisé avec des compositions à base de ciment hydraulique comme les ciments Portland CEM I ; les ciments alumineux, divers ciments composés CEM II ou CEM III constitués par mélange, avant ou après broyage de clinker de Portland et de laitier, de pouzzolanes naturelles et/ou de cendres volantes.

Les adjuvants décrits peuvent être utilisés pour différentes compositions hydrauliques, notamment des compositions de béton, de mortier, de coulis, de chapes ou de pâtes.

L'utilisation des (co)polymères décrits est particulièrement intéressante pour l'abaissement de la viscosité de compositions de béton ayant un rapport E/C (rapport massique entre l'eau et le ciment) compris de 0,15 à 1, de préférence compris de 0,2 à 0,8.

Ils sont notamment intéressants pour des formulations de bétons autonivelants/autoplaçants (BAN/BAP), de bétons prêt-à-l'emploi, ou encore de bétons destinés au domaine de la pré-fabrication.

L'invention sera décrite ci-après plus en détails au moyen des figures et des exemples qui suivent :
Figure 1 : un diagramme montrant l'effet du dosage en groupes hydrophobes sur la viscosité à 5 minutes pour les (co)polymères acryliques ; et
Figure 2 : un diagramme montrant l'effet du dosage en groupes hydrophobes sur la viscosité à 5 minutes pour les (co)polymères méthacryliques.

### EXEMPLES

Sauf indication contraire, les mentions de pourcentages s'entendent dans l'exposé qui suit en poids par rapport au poids de la formulation finale.

### EXEMPLE A (exemple de comparaison)

Dans un quadricol muni d'un agitateur et de moyens de chauffage et relié à une trompe d'eau, on a introduit 25g d'acide polyacrylique (Mw= 2000, titre acide mesuré = 330 mg KOH/g, extrait sec 49% en poids) puis 0,34 g (5,5% molaire des fonctions carboxyliques de l'acide polyacrylique) d'hydroxyde de lithium. Dans le milieu ont été ensuite introduit 73,66g (25% molaire des fonctions carboxyliques de l'acide polyacrylique) de polyoxyde d'éthylène méthoxylé de masse molaire Mw 2000 (MPEG2000). Le mélange réactionnel a été porté à une température de 80°C et mis progressivement sous vide (pression d'environ 50 mbar). A la fin de la distillation de l'eau, la température du milieu réactionnel a été portée progressivement à 175°C. Le temps de réaction a été mesuré à partir du moment où le milieu réactionnel atteint 170°C. La réaction a été poursuivie pendant une durée de 6h.

L'avancement de la réaction d'estérification est suivi par le dosage de MPEG non réagi, par GPC, par comparaison de l'aire du pic avec une courbe d'étalonnage établie préalablement. La teneur en polyéther résiduelle est indiquée dans le tableau 1 ci-dessous

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

### EXEMPLE B (exemple de comparaison)

Dans un quadricol muni d'un agitateur et de moyens de chauffage et relié à une trompe d'eau, on a introduit 25,0g d'acide polyméthacrylique (Mw= 4000 soit un degré de polymérisation de la chaîne principale d'environ 47, titre acide mesuré = 184,8 mg KOH/g, extrait sec 30,4% en poids) puis 2,0g (2,5% molaire des fonctions carboxyliques de l'acide polyméthacrylique) d'une solution d'hydroxyde de sodium à 50% en poids.

Dans le milieu ont été ensuite introduit 30,1 g (18,25% molaire des fonctions carboxyliques de l'acide polyméthacrylique) de polyoxyde d'éthylène méthoxylé de masse molaire Mw 2000 (MPEG 2000) et 11,3 g 18,25% molaire des fonctions carboxyliques de l'acide polyméthacrylique) de polyoxyde d'éthylène méthoxylé de masse molaire Mw 750 (MPEG 750).

Le mélange réactionnel a été porté à une température de 80°C et mis progressivement sous vide (pression d'environ 50 mbar). A la fin de la distillation de l'eau, la température du milieu réactionnel a été portée progressivement à 175°C. Le temps de réaction a été mesuré à partir du moment où le milieu réactionnel atteint 170°C. La réaction a été poursuivie pendant une durée de 8h30. La teneur en polyéther résiduelle est indiquée dans le tableau 1 ci-dessous.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

### EXEMPLE C (exemple de comparaison)

Dans un quadricol muni d'un agitateur et de moyens de chauffage et relié à une trompe d'eau, on a introduit 50 g d'acide polyméthacrylique (Mw= 4000 soit un degré de polymérisation de la chaîne principale d'environ 47, titre acide mesuré = 184,8 mg KOH/g, extrait sec 30 % en poids) puis 0,34 g (2,5 % molaire des fonctions carboxyliques de l'acide polyméthacrylique) d'une solution d'hydroxyde de sodium à 50 % en poids.

Dans le milieu ont été ensuite introduit 95,76 g (29 % molaire des fonctions carboxyliques de l'acide polyméthacrylique)de polyoxyde d'éthylène méthoxylé de masse molaire Mw 2000 (MPEG2000) contenant 20 % molaires d'oxyde de propylène répartis statistiquement le long de la chaîne, laquelle est terminée par un groupe méthoxy. Le mélange réactionnel a été porté à une température de 80°C et mis progressivement sous vide (pression d'environ 50 mbar). A la fin de la distillation de l'eau, la température du milieu réactionnel a été portée progressivement à 175°C. Le temps de réaction a été mesuré à partir du moment où le milieu réactionnel atteint 170°C. La réaction a été poursuivie pendant une durée de 6h.

L'avancement de la réaction d'estérification est suivi par le dosage de MPEG non réagi, par GPC, par comparaison de l'aire du pic avec une courbe d'étalonnage établie préalablement. La teneur en polyéther résiduelle est indiquée dans le tableau 1 ci-dessous

A l'issue de la réaction, le milieu réactionnel est ramené à pression atmosphérique et la chauffe est coupée. Une fois la température du milieu réactionnel inférieure à 90°C, le polymère fondu est dilué à 50 % en poids dans l'eau.

### EXEMPLE D (exemple de comparaison)

Dans un quadricol muni d'un agitateur et de moyens de chauffage et relié à une trompe d'eau, on a introduit 50 g d'acide polyméthacrylique (Mw= 4000 soit un degré de polymérisation de la chaîne principale d'environ 47, titre acide mesuré = 184,8 mg KOH/g, extrait sec 30 % en poids) puis 0,34 g (2,5 % molaire des fonctions carboxyliques de l'acide polyméthacrylique) d'une solution d'hydroxyde de sodium à 50 % en poids.

Dans le milieu ont été ensuite introduit 102,31g (31 % molaire des fonctions carboxyliques de l'acide polyméthacrylique) de polyoxyde d'éthylène méthoxylé de masse molaire Mw 2000 (MPEG2000) contenant 10 % molaires d'oxyde de propylène répartis statistiquement le long de la chaîne, laquelle est terminée par un groupe méthoxy. Le mélange réactionnel a été porté à une température de 80°C et mis progressivement sous vide (pression d'environ 50 mbar). A la fin de la distillation de l'eau, la température du milieu réactionnel a été portée progressivement à 175°C. Le temps de réaction a été mesuré à partir du moment où le milieu réactionnel atteint 170°C. La réaction a été poursuivie pendant une durée de 6h.

L'avancement de la réaction d'estérification est suivi par le dosage de MPEG non réagi, par GPC, par comparaison de l'aire du pic avec une courbe d'étalonnage établie préalablement. La teneur en polyéther résiduelle est indiquée dans le tableau 1 ci-dessous

A l'issue de la réaction, le milieu réactionnel est ramené à pression atmosphérique et la chauffe est coupée. Une fois la température du milieu réactionnel inférieure à 90°C, le polymère fondu est dilué à 50 % en poids dans l'eau.

### EXEMPLE 1

Dans un quadricol muni d'un agitateur et de moyens de chauffage et relié à une trompe d'eau, on a introduit 25g d'acide polyacrylique (Mw=2000 soit un degré de polymérisation de la chaîne principale d'environ 28, titre acide mesuré =330 mg KOH/g, extrait sec 49% en poids) puis 0,34 g (5,5% molaire des fonctions carboxyliques de l'acide polyacrylique) d'hydroxyde de lithium.

Dans le milieu ont été ensuite introduit 73,66g (25% molaire des fonctions carboxyliques de l'acide polyacrylique) de polyéther (polyoxyde d'éthylène/polyoxyde de propylène de masse molaire Mw 2000 contenant 10% molaires d'oxyde de propylène répartis statistiquement le long de la chaîne, laquelle est terminée par un groupe méthoxy).

Le mélange réactionnel a été porté à une température de 80°C et mis progressivement sous vide (pression d'environ 50 mbar). A la fin de la distillation de l'eau, la température du milieu réactionnel a été portée progressivement à 175°C. Le temps de réaction a été mesuré à partir du moment où le milieu réactionnel atteint 170°C. La réaction a été poursuivie pendant une durée de 8h30. La teneur en polyéther résiduelle est indiquée dans le tableau 1 ci-dessous.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

**Tableau 1 : constitution des (co)polymères testés**

| | | | **Polyéther** | | **Taux d'ester visé** % molaire] | **Polyéther résiduel** % en poids] |
|---|---|---|---|---|---|---|
| **Exemple** | **Acide polycarboxylique** | **Degré de polymérisation de la chaîne principale** | **Masse molaire** | **Oxyprop.** % molaire] | | |
| **A** | Acrylique | 28 | 2000 | 0 | 25 | 4,7 |
| **B** | Méthacrylique | 47 | 2000/750 | 0/0 | 36,5 | 3,2 |
| **C** | Méthacrylique | 47 | 2000 | 20 | 29 | 7,8 |
| **D** | Méthacrylique | 47 | 2000 | 10 | 31 | 8,2 |
| **1** | Acrylique | 28 | 2000 | 10 | 25 | 6,5 |
| **2** | Acrylique | 28 | 2000 | 20 | 25 | 9,9 |
| **3** | Acrylique | 28 | 2000 | 50 | 25 | 11,5 |
| **4** | Acrylique | 28 | 2000 | 10* | 25 | 8,5 |
| **5**** | Méthacrylique | 47 | 2000/750 | 10/0 | 36,5 | 3,5 |
| **6**** | Méthacrylique | 47 | 2000/750 | 30/0 | 36,5 | 3,1 |
| **7**** | Méthacrylique | 47 | 2000/750 | 50/0 | 36,5 | 3,8 |
| **8** | Méthacrylique | 35 | 2000 | 20 | 29 | 9,6 |
| **9** | Méthacrylique | 35 | 2000 | 10 | 29 | 9,4 |
| **10** | Méthacrylique | 35 | 2000 | 30 | 29 | 9,9 |

| | | | | | | |
|---|---|---|---|---|---|---|
| * en moyenne, le polyéther comporte des chaînes avec 50% et 0% OP ** pas selon l'invention | | | | | | |

### EXEMPLE 2

L'exemple 1 a été répété dans les mêmes conditions opératoires mais en remplaçant le polyéther par un MPEG de masse molaire 2000 avec 20% molaires d'unités oxypropylène. La réaction est arrêtée au bout de 8h30. La teneur en polyéther résiduelle est indiquée dans le tableau 1 ci-dessus.

### EXEMPLE 3

On a préparé d'abord la solution de catalyseur par neutralisation d'acide p-toluène sulfonique en solution aqueuse, dont le pH est amené à un pH compris entre 7 et 10 à l'aide de soude (à 50%, puis 1 N et enfin 0.1 N).

Dans un quadricol muni d'un agitateur et de moyens de chauffage et relié à une trompe d'eau, on a introduit 25g d'acide polyacrylique (Mw= 2000, titre acide mesuré =330 mg KOH/g, extrait sec 49% en poids) puis 0,86g (28,7 g d'une solution à 3% en poids, 3% molaire des fonctions carboxyliques de l'acide polyacrylique) de p-toluènesulfonate de sodium.

Dans le milieu ont été ensuite introduit 73,66g (25% molaire des fonctions carboxyliques de l'acide polyacrylique) de polyoxyde d'éthylène / polyoxyde de propylène de masse molaire Mw 2000 contenant 50% molaires d'oxyde de propylène répartis statistiquement le long de la chaîne, laquelle est terminée par un groupe méthoxy.

Le mélange réactionnel a été porté à une température de 80°C et mis progressivement sous vide (pression d'environ 50 mbar). A la fin de la distillation de l'eau, la température du milieu réactionnel a été portée progressivement à 175°C. Le temps de réaction a été mesuré à partir du moment où le milieu réactionnel atteint 170°C. La réaction a été poursuivie pendant une durée de 8h30.

L'avancement de la réaction d'estérification est suivi par le dosage de MPEG (polyéther methoxy terminé) non réagi, par GPC, par comparaison de l'aire du pic avec une courbe d'étalonnage établie préalablement.

A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau.

La teneur en polyéther résiduelle est indiquée dans le tableau 1 ci-dessus.

### EXEMPLE 4

Afin d'étudier l'influence de la disposition des groupes hydrophobes, l'exemple 1 a été répété dans les conditions opératoires de l'exemple 3 mais en remplaçant le polyéther par un MPEG mixte OP/OE de même masse molaire comportant une chaîne avec un ratio molaire OP/(OE + OP) de 50% et une chaîne 100% d'unités oxyéthylène. Etant donné la proportion entre les 2 chaînes, le MPEG comporte en moyenne 10% molaire d'unités oxypropylène par chaîne. La réaction est arrêtée au bout de 6 heures. La teneur en polyéther résiduelle est indiquée dans le tableau 1 ci-dessus.

### EXEMPLE 5

Dans un quadricol muni d'un agitateur et de moyens de chauffage et relié à une trompe d'eau, on a introduit [25,0]g d'acide polyméthacrylique (Mw= 4000, titre acide mesuré = 184,8 mg KOH/g, extrait sec 30,4% en poids) puis 2,0 g (2,5% molaire des fonctions carboxyliques de l'acide polyméthacrylique) d'une solution d'hydroxyde de sodium à 50% en poids.

Dans le milieu ont été ensuite introduit 30,1 g (18,5% molaire des fonctions carboxyliques de l'acide polyméthacrylique) de polyoxyde d'éthylène/polyoxyde de propylène de masse molaire Mw 2000 contenant 10% molaires d'oxyde de propylène répartis statistiquement le long de la chaîne, laquelle est terminée par un groupe méthoxy et 11,3 g (18,5% molaire des fonctions carboxyliques de l'acide polyméthacrylique) de polyoxyde d'éthylène méthoxylé de masse molaire Mw 750 (MPEG750).

Le mélange réactionnel a été porté à une température de 80°C et mis progressivement sous vide (pression d'environ 50 mbar). A la fin de la distillation de l'eau, la température du milieu réactionnel a été portée progressivement à 175°C. Le temps de réaction a été mesuré à partir du moment où le milieu réactionnel atteint 170°C. La réaction a été poursuivie pendant une durée de 8h30. A l'issue de la réaction, le milieu réactionnel est ramené à pression atmosphérique et la chauffe est coupée. Une fois la température du milieu réactionnel inférieure à 90°C, le polymère fondu est dilué à 50% en poids dans l'eau. La teneur en polyéther résiduel mesurée est portée dans le tableau 1 ci-dessous.

### EXEMPLE 6

L'exemple 5 est répété dans les mêmes conditions opératoires mais en remplaçant le polyéther de masse molaire Mw 2000 par un polyoxyde d'éthylène/polyoxyde de propylène de masse molaire Mw 2000 contenant 30% molaires d'oxyde de propylène répartis statistiquement le long de la chaîne, laquelle est terminée par un groupe méthoxy. La réaction est arrêtée au bout de 8h30 h. La teneur en polyéther résiduel mesurée est portée dans le tableau 1 ci-dessus.

### EXEMPLE 7

L'exemple 5 est répété dans les mêmes conditions opératoires mais en remplaçant le polyéther de masse molaire Mw 2000 par un polyoxyde d'éthylène/polyoxyde de propylène de masse molaire Mw 2000 contenant 50% molaires d'oxyde de propylène répartis statistiquement le long de la chaîne, laquelle est terminée par un groupe méthoxy. La réaction est arrêtée au bout de 8h30. La teneur en polyéther résiduel mesurée est portée dans le tableau 1 ci-dessus.

### EXEMPLE 8

L'exemple 8 est analogue à l'exemple C à la différence que l'acide polyméthacrylique (Mw= 4000) est remplacé par de l'acide polyméthacrylique de masse molaire Mw de 3100 g/mol, ce qui correspond à un degré de polymérisation d'environ 35.

Plus précisément, dans un quadricol muni d'un agitateur et de moyens de chauffage et relié à une trompe d'eau, on a introduit 50 g d'acide polyméthacrylique (Mw= 3100, titre acide mesuré = 166 mg KOH/g, extrait sec 30 % en poids) puis 0,32 g (2,5 % molaire des fonctions carboxyliques de l'acide polyméthacrylique) d'une solution d'hydroxyde de sodium à 50 % en poids.

Dans le milieu ont été ensuite introduit 86,01 g (29 % molaire des fonctions carboxyliques de l'acide polyméthacrylique) de polyoxyde d'éthylène méthoxylé de masse molaire Mw 2000 contenant 20 % molaires d'oxyde de propylène répartis statistiquement le long de la chaîne, laquelle est terminée par un groupe méthoxy.

Le mélange réactionnel a été porté à une température de 80°C et mis progressivement sous vide (pression d'environ 50 mbar). A la fin de la distillation de l'eau, la température du milieu réactionnel a été portée progressivement à 175 °C. Le temps de réaction a été mesuré à partir du moment où le milieu réactionnel atteint 170°C. La réaction a été poursuivie pendant une durée de 8h30. A l'issue de la réaction, le milieu réactionnel est ramené à pression atmosphérique et la chauffe est coupée. Une fois la température du milieu réactionnel inférieure à 90 °C, le polymère fondu est dilué à 50 % en poids dans l'eau. La teneur en polyéther résiduel mesurée est portée dans le tableau 1 ci-dessus.

### EXEMPLE 9

L'exemple 8 est répété dans les mêmes conditions opératoires mais en remplaçant le polyéther de masse molaire Mw 2000 par un polyoxyde d'éthylène/polyoxyde de propylène de masse molaire Mw 2000 contenant 10 % molaires d'oxyde de propylène répartis statistiquement le long de la chaîne, laquelle est terminée par un groupe méthoxy. La réaction est arrêtée au bout de 8h30 h. La teneur en polyéther résiduel mesurée est portée dans le tableau 1 ci-dessus.

### EXEMPLE 10

L'exemple 8 est répété dans les mêmes conditions opératoires mais en remplaçant le polyéther de masse molaire Mw 2000 par un polyoxyde d'éthylène/polyoxyde de propylène de masse molaire Mw 2000 contenant 30 % molaires d'oxyde de propylène répartis statistiquement le long de la chaîne, laquelle est terminée par un groupe méthoxy. La réaction est arrêtée au bout de 8h30. La teneur en polyéther résiduel mesurée est portée dans le tableau 1 ci-dessus.

### EXEMPLES D'APPLICATION

Les polymères obtenus dans les exemples 1 à 10 ont été testés à titre d'adjuvants pour différentes compositions hydrauliques et comparés à ceux des polymères selon les exemples A, B, C et D.

Sauf indication contraire, les polymères sont utilisés sans purification subséquente, tel qu'obtenus à l'issue de la réaction, après neutralisation et dilution à 20% en poids en solution aqueuse.

Les performances des polymères à titre d'adjuvants de compositions hydrauliques sont évaluées en suivant la viscosité et l'étalement de mortiers test.

Deux différentes formulations de mortier ont été utilisées, lesquelles seront par la suite appelées mortier I et mortier II. Leur composition est indiquée dans le tableau 2 ci-dessous.

**Tableau 2 : Composition des mortiers I et II**

| **Composant** | **Mortier I** | **Mortier II** |
|---|---|---|
| | **[g]** | **[g]** |
| Sable normalisé | 1350 | 1350 |
| Fulchiron E2 LS | 200,1 | 557,7 |
| Ciment CEMI 52,5 Saint Pierre La Cour | 480,4 | 624,9 |
| Filler Erbray | 340,8 | 412,1 |
| Eau gâchée totale | 326,7 (dont 100 pour prémouillage) | 375,1 (dont 100 pour prémouillage) |
| **Rapport Eau /Ciment** | **0.680** | **0,60** |

Le ciment est le CEM I 52,5 de Saint Pierre La Cour (Fournisseur : Lafarge).

Les dosages respectifs d'adjuvants indiqués dans le tableau 3 sont exprimés en masse sèche par rapport à la quantité de ciment.

Le mortier a été préparé à hygrométrie et température constante (20 ±1 °C - 70 ± 5% humidité relative).

Afin de neutraliser un éventuel effet moussant des adjuvants, une dose de tributylphosphate (1% par rapport à la solution d'adjuvant) est ajoutée en même temps que le (co)polymère dans l'eau de gâchage.

### a) Préparation du mortier

Le mortier a été préparé de la manière suivante :
On a introduit dans le bol d'un malaxeur (Perrier BA 008) le sable normalisé. Puis, on a ajouté environ 6% massique par rapport au sable d'eau de mouillage en mélangeant à vitesse d'environ 140 tr/min en l'espace de 30 secondes. Le mélange a été poursuivi pendant 30 secondes avant de laisser reposer la masse pendant 4 minutes. Ensuite, on a introduit le ciment et le filler calcaire (Origine : ERBRAY fourni par la société MEAC) puis malaxé pendant 1 minute avant d'ajouter l'eau de gâchage et le dosage spécifié en adjuvant, tout en malaxant. Après ces étapes, on a poursuivi le malaxage pendant encore 2 minutes à 280 tr/min.

### b) Effet fluidifiant et réducteur de viscosité

L'effet fluidifiant et l'effet réducteur de viscosité ont été mesurés par le biais de tests micro-béton.

L'effet fluidifiant est évalué par la mesure de l'étalement d'un mortier sur une plaque en verre.

La quantité d'adjuvant est dosée de façon à obtenir une fluidification initiale suffisante, c'est-à-dire une valeur d'étalement de 320 à 350 mm. Le dosage initial est indiqué en % en poids (de polymère sec) par rapport au poids de ciment. L'échéance initiale est fixée à 5 minutes après ajout du ciment au mélange de sables mouillés.

On évalue également la viscosité par le biais de la mesure du temps d'écoulement du mortier à travers un entonnoir tronconique, présentant un diamètre de 150 mm à la base et 17 mm au sommet, et comportant deux repères séparées de 60 mm, le premier se trouvant à 12 mm de la base.

La viscosité du mortier correspond à la valeur en secondes du temps nécessaire pour que le mortier s'écoule à travers l'entonnoir du repère 1 jusqu'au repère 2.

L'effet réducteur de viscosité d'un adjuvant est constaté par comparaison des valeurs de viscosité des micro-bétons pour un étalement comparable.

**Tableau 3 : Effets des polymères acryliques sur la viscosité de mortiers test mortier I)**

| **Exemple** | **Mortier** | **Dosage*** | | **Temps (min)** |
|---|---|---|---|---|
| | | | | 5 |
| A | I | 0,20 | Etalement | 330 |
| | | | Viscosité | 16 |
| 1 | I | 0,33 | Etalement | 330 |
| | | | Viscosité | 14 |
| 2 | I | 0,33 | Etalement | 330 |
| | | | Viscosité | 14 |
| 3 | I | 0,27 | Etalement | 330 |
| | | | Viscosité | 13 |
| 4 | I | 0,20 | Etalement | 345 |
| | | | Viscosité | 13 |

| | | | | |
|---|---|---|---|---|
| * : en % en poids sec / poids de ciment | | | | |

On constate que la substitution de groupes oxyéthylène dans les chaînes latérales des polymères de type PCP à base de monomères acryliques par des groupes oxypropylène à caractère hydrophobe, permet de réduire la viscosité de formulations de mortier.

En effet, on constate que même une présence faible de groupes hydrophobes a un effet notable sur la réduction de la viscosité. Ainsi, l'adjuvant selon l'exemple A ne contenant pas d'oxyde de propylène montre une valeur d'écoulement plus élevée que les exemples 1 à 4 qui contiennent des groupes hydrophobes, à savoir des chaînons oxyde de propylène.

La présence de 50% de groupes oxypropylène dans le polymère selon l'exemple 3 permet d'abaisser le dosage tout en permettant une réduction de la viscosité.

Le polymère selon l'exemple 4 permet de juger de l'effet de la disposition des groupes hydrophobes dans le polymère, puisqu'il comporte des chaînes latérales ayant 50% d'unités d'oxypropylène et des chaînes latérales seulement constituées d'unités d'oxyéthylène. On constate également une baisse sensible de la viscosité initiale. Il semble donc que ce soit la teneur globale en groupes.

**Tableau 4 : Effets des polymères méthacryliques sur la viscosité - CEM I SPLC (mortier II)**

| **Exemple** | **Mortier** | **Dosage*** | | **Temps (min)** |
|---|---|---|---|---|
| | | | | 5 |
| B | II | 0,52 | Etalement | 310 |
| | | | Viscosité | 57 |
| 5 | II | 0,52 | Etalement | 310 |
| | | | Viscosité | 53 |
| 6 | II | 0,52 | Etalement | 335 |
| | | | Viscosité | 33 |
| 7 | II | 0,17 | Etalement | 310 |
| | | | Viscosité | 40 |

On constate que la substitution de groupes oxyéthylène dans les chaînes latérales des polymères de type PCP à base de monomères méthacryliques par des groupes oxypropylène à caractère hydrophobe, permet de réduire la viscosité de formulations de mortier.

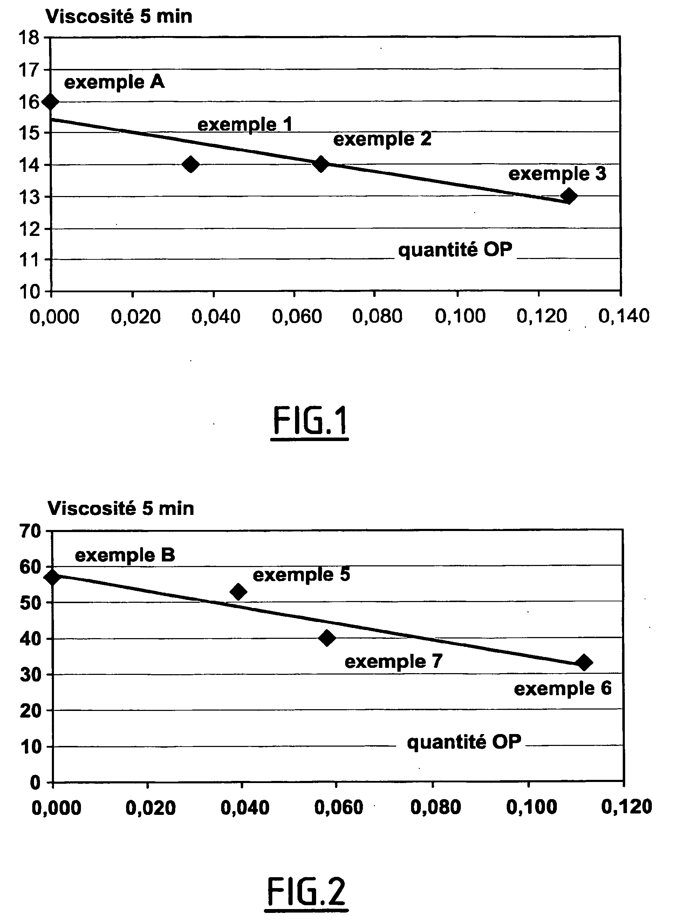

Les figures 1 et 2 montrent que l'effet réducteur de viscosité est lié à la quantité de groupes hydrophobes introduits dans la gâchée du liant, aussi bien pour les (co)polymères acryliques que pour le (co)polymères méthyacryliques. En effet, on constate que dans l'intervalle étudié, la baisse de la viscosité est proportionnelle au produit du dosage et de la teneur en groupes hydrophobes du (co)polymère.

**Tableau 5 : Effets du degré de polymérisation de la chaîne principale**

| Exemple | Dosage* | Etalement à 5 minutes (mm) | Viscosité à 5 minutes (s) |
|---|---|---|---|
| C | 0,30 | 300 | 20 |
| D | 0,37 | 300 | 24 |
| 8 | 0,25 | 315 | 16 |
| 9 | 0,25 | 320 | 17 |
| 10 | 0,25 | 315 | 16 |

| | | | |
|---|---|---|---|
| * : en % en poids sec / poids de ciment | | | |

On constate que la diminution du degré de polymérisation de la chaîne principale du copolymère dispersant permet de réduire la viscosité de formulations de mortier. Dans les exemples 8, 9 et 10 relatifs à un copolymère dont la chaîne principale a un degré de polymérisation de 35, la diminution de viscosité obtenue est d'environ 20 % par rapport aux exemples C et D pour lesquels la chaîne principale du copolymère a un degré de polymérisation de 47. En outre, en plus de permettre l'obtention d'un étalement à 5 minutes du même ordre et une diminution de la viscosité, le copolymère dont la chaîne principale a un degré de polymérisation de 35 est utilisé avec un dosage inférieur d'environ 16 % par rapport au dosage du copolymère dont la chaîne principale a un degré de polymérisation de 47.

## Revendications

1. Utilisation d'un (co)polymère comportant une chaîne principale composée essentiellement d'unités (méth)acryliques présentant un degré de polymérisation de 15 à 45 et des chaînes latérales de type polyoxyalkylés d'une masse molaire moyenne comprise de 500 à 5000 g/mol comprenant des unités hydrophobes distribuées de manière statistique à titre d'adjuvant afin d'abaisser la viscosité de compositions à base de ciment hydraulique.

2. Utilisation selon la revendication 1, dans laquelle la masse molaire moyenne en poids du (co)polymère est de 10 000 à 50 000 g/mol.

3. Utilisation de (co)polymères selon la revendication 1 ou 2, dans laquelle les unités hydrophobes sont des groupes oxypropylène et oxybutylène.

4. Utilisation selon la revendication 3, dans laquelle les unités hydrophobes sont des groupes oxypropylène.

5. Utilisation selon l'une des revendications 1 à 4, dans laquelle le (co)polymère comporte des unités (méth)acryliques de formule (I) suivante : 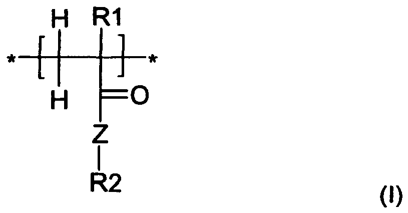 dans laquelle :
R¹ est hydrogène ou méthyle ;
Z est O ou NH ; et
R² est H ou un groupe alkyle, aryle, alkylaryle, arylalkyle de 1 à 20 atomes de carbone, ou encore un groupe -Q-R³ dans lequel R³ est H ou un groupe alkyle, aryle, alkylaryle, arylalkyle de 1 à 20 atomes de carbone, et Q est de formule (II): 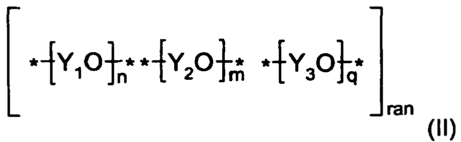
dans laquelle :
- Y₁ représente un groupe alkylène de 2 atomes de carbone,
- Y₂ représente un groupe alkylène de 3 atomes de carbone ;
- Y₃ représente un groupe alkylène de 4 atomes de carbone ;
- n est un nombre entier compris de 1 à 100 ;
- m est un nombre entier compris de 0 à 150 ;
- q est un nombre entier compris de 0 à 150 ; et
- (n + m + q) est un nombre entier compris de 1 à 500,
sachant que le (co)polymère de formule (I) comporte au moins un groupe Q avec m ou q >0.

6. Utilisation selon la revendication 5, dans laquelle le (co)polymère est susceptible d'être obtenu par polymérisation radicalaire d'un monomère (méth)acrylique de formule (la) suivante : 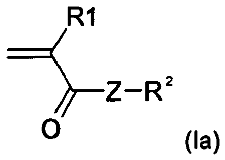 dans laquelle les substituants R¹, Z et R² ont la même signification que pour la formule (I) dans la revendication 8.

7. Utilisation selon la revendication 5 ou 6, dans laquelle dans les formules (I) et (la), Z est un oxygène.

8. Utilisation selon l'une des revendications 5 à 7, dans laquelle dans les formules (I) et (la), R² est un groupe -Q-R³ dans lequel R³ est un groupe méthyle ou éthyle.

9. Utilisation selon l'une des revendications 5 à 8, dans laquelle dans la formule (II), R² est un groupe -Q-R³ dans lequel n varie de 1 à 100 et m varie de 1 à 75 et q vaut 0.

10. Utilisation selon l'une des revendications 1 à 9, dans laquelle le dosage en (co)polymère est ajusté de manière à ce que le taux de groupes hydrophobes dans la composition de liant hydraulique soit compris entre 0,02 à 0,5 % massiques par rapport au poids de liant.

11. Utilisation selon l'une des revendications 1, 3 et 5 à 9, dans laquelle le (co)polymère est susceptible d'être obtenu par un procédé dans lequel l'on fait réagir, en présence d'eau et d'un catalyseur, à une température comprise entre 120 et 250°C :
- au moins un acide polycarboxylique obtenu par polymérisation d'au moins un acide carboxylique non saturé; et
- au moins un polyéther contenant un groupe hydroxyle libre pouvant réagir avec une fonction carboxylique du dit acide polycarboxylique,
le catalyseur étant un sel alcalin ou alcalin-terreux d'un acide protique fort.

## Patentansprüche

1. Verwendung eines (Co)Polymers umfassend eine Hauptkette, die sich im Wesentlichen zusammensetzt aus (Meth)Acryl-Einheiten, mit einem Polymerisationsgrad von 15 bis 45 und Polyalkyloxy-Seitenketten mit einer durchschnittlichen molaren Masse von 500 bis 5000 g/mol, umfassend hydrophobe Einheiten, die statistisch verteilt sind, zur Verringerung der Viskosität von Zusammensetzungen auf Basis von hydraulischem Zement.

2. Verwendung gemäß Anspruch 1, wobei das Gewichtsmittel-Molekulargewicht des (Co)Polymers 10.000 bis 50.000 g/mol beträgt.

3. Verwendung gemäß Anspruch 1 oder 2, wobei die hydrophoben Einheiten Oxypropylen- und Oxybutylen-Gruppen sind.

4. Verwendung gemäß Anspruch 3, wobei die hydrophoben Einheiten Oxypropylen-Gruppen sind.

5. Verwendung gemäß einem der Ansprüche 1 bis 4, wobei das (Co)Polymer (Meth)Acryl-Einheiten der folgenden Formel (I) umfasst: 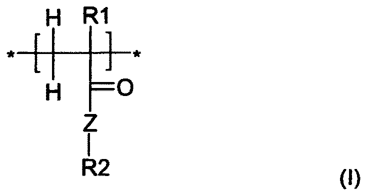 wobei:
R¹ Wasserstoff oder Methyl ist;
Z O oder NH ist; und
R² H oder eine Alkyl-, Aryl-, Alkylaryl- oder Arylalkyl-Gruppe mit 1 bis 20 Kohlenstoffatomen ist, oder eine -Q-R³-Gruppe, wobei R³ H oder eine Alkyl-, Aryl-,
Alkylaryl- oder Arylalkyl-Gruppe mit 1 bis 20 Kohlenstoffatomen ist, und Q die Formel (II) hat: 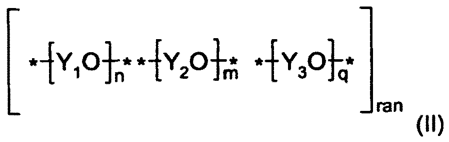
wobei:
- Y¹ eine Alkylen-Gruppe mit 2 Kohlenstoffatomen darstellt,
- Y² eine Alkylen-Gruppe mit 3 Kohlenstoffatomen darstellt;
- Y³ eine Alkylen-Gruppe mit 4 Kohlenstoffatomen darstellt;
- n eine ganze Zahl von 1 bis 100 ist;
- m eine ganze Zahl von 0 bis 150 ist;
- q eine ganze Zahl von 0 bis 150 ist; und
- (n+m+q) eine ganze Zahl von 1 bis 500 ist,
mit der Maßgabe, dass das (Co)Polymer der Formel (I) mindestens eine Gruppe Q mit m oder q >0 umfasst.

6. Verwendung gemäß Anspruch 5, wobei das (Co)Polymer durch radikalische Polymerisation eines (Meth)Acryl-Monomers der folgenden Formel (Ia) erhalten werden kann: 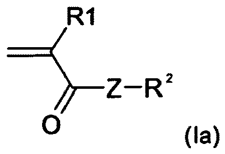 wobei die Substituenten R¹, Z und R² wie in Formel (I) in Anspruch 8 definiert sind.

7. Verwendung gemäß Anspruch 5 oder 6, wobei Z in den Formeln (I) und (Ia) Sauerstoff ist.

8. Verwendung gemäß einem der Ansprüche 5 bis 7, wobei R² in den Formeln (I) und (Ia) eine -Q-R³-Gruppe ist, wobei R³ eine Methyl- oder Ethylgruppe ist.

9. Verwendung gemäß einem der Ansprüche 5 bis 8, wobei R² in Formel (II) eine -Q-R³-Gruppe ist, wobei n zwischen 1 und 100 liegt und m zwischen 1 und 75 liegt und q 0 ist.

10. Verwendung gemäß einem der Ansprüche 1 bis 9, wobei die Menge an (Co)Polymer derart angepasst wird, dass der Anteil an hydrophoben Gruppen in der Zusammensetzung des hydraulischen Bindemittels zwischen 0,02 bis 0,5 Gew.-% beträgt, basierend auf dem Gewicht des Bindemittels.

11. Verwendung gemäß einem der Ansprüche 1, 3 und 5 bis 9, wobei das (Co)Polymer erhalten werden kann, indem, in Anwesenheit von Wasser und einem Katalysator bei einer Temperatur zwischen 120 und 250 °C:
- mindestens eine Polycarbonsäure, erhalten durch Polymerisation mindestens einer ungesättigten Carbonsäure; und
- mindestens ein Polyether, umfassend eine freie Hydroxylgruppe, die in der Lage ist, mit einer Carboxylgruppe der Polycarbonsäure zu reagieren,
zur Reaktion gebracht werden, wobei der Katalysator ein Alkali- oder Erdalkalisalz einer starken protischen Säure ist.

## Claims

1. Use of a (co)polymer comprising a main chain, essentially consisting of (meth)acrylic units having a degree of polymerisation of 15 to 45, and side chains of polyoxyalkylated type having a mean molecular weight between 500 and 5000 g/mol comprising statistically-distributed hydrophobic units as an adjuvant for lowering the viscosity of hydraulic compositions of hydraulic cement.

2. Use according to claim 1, wherein the mean molecular weight of the (co)polymer is 10 000 to 50 000 g/mol.

3. Use of (co)polymers according to claim 1 or 2, wherein the hydrophobic units are oxypropylene and oxybutylene groups.

4. Use according to claim 3, wherein the hydrophobic units are oxypropylene groups.

5. Use according to one of claims 1 to 4 wherein the (co)polymer comprises (meth)acrylic units of following formula (I): 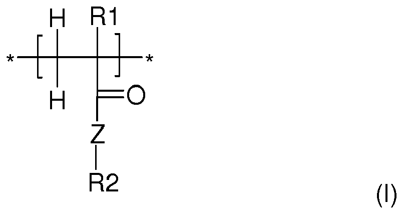 wherein:
R¹ is hydrogen or methyl;
Z is O or NH; and
R² is H or an alkyl, aryl, alkylaryl, arylalkyl group with 1 to 20 carbon atoms, or -Q-R³ group in which R³ is H or an alkyl, aryl, alkylaryl, arylalkyl group with 1 to 20 carbon atoms, and Q is of formula (II): 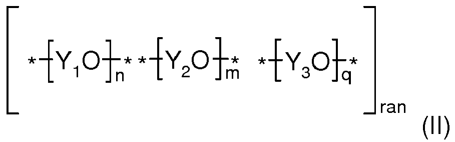
wherein:
- Y₁ represents an alkylene group with 2 carbon atoms;
- Y₂ represents an alkylene group with 3 carbon atoms;
- Y₃ represents an alkylene group with 4 carbon atoms;
- n is an integer of 1 to 100;
- m is an integer of 0 to 150;
- q is an integer of 0 to 150; and
- (n + m + q) is an integer of 1 to 500,
bearing in mind that the (co)polymer of formula (I) comprises at least one Q group in which m or q > 0.

6. Use according to claim 5, wherein the (co)polymer is obtainable by radical polymerisation of a (meth)acrylic monomer of following formula (Ia): 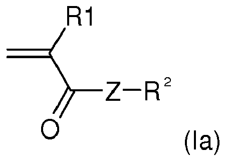 wherein the substituents R¹, Z and R² have the same meaning as for formula (I) in claim 5.

7. Use according to claim 5 or 6 wherein in the formulas (I) and (Ia), Z is an oxygen.

8. Use according to claims 5 to 7 wherein in the formulas (I) and (Ia), R² is a -Q-R³ group in which R³ is a methyl or ethyl group.

9. Use according to claims 5 to 8, wherein in formula (II) R² is a -Q-R³ group in which n varies from 1 to 100 and m varies from 1 to 75 and q equals 0.

10. Use according to claims 1 to 9, wherein the (co)polymer dosage is adjusted so that the content of hydrophobic groups in the composition of the hydraulic binder is between 0.02 and 0.5 % by weight relative to the weight of binder.

11. Use according to claims 1, 3 and 5 to 9, wherein the (co)polymer is obtainable using a method in which the following are caused to react in the presence of water and at a temperature of between 120 and 250°C:
- at least one polycarboxylic acid obtained by polymerising at least one unsaturated carboxylic acid; and
- at least one polyether containing a free hydroxyl group capable of reacting with a carboxylic function of the said polycarboxylic acid,
the catalyst being an alkaline or alkaline-earth salt of a strong protic acid.
